# EUROPÄISCHE PATENTSCHRIFT

(11) **EP 0 648 815 B1**
(45) Veröffentlichungstag und Bekanntmachung des Hinweises auf die Patenterteilung: **29.07.1998**
(21) Anmeldenummer: 94116177.0
(22) Anmeldetag: 13.10.1994
(51) Int. Cl.: C09B 62/517

(54) **Wasserlösliche, metallfreie Phthalocyaninfarbstoffe, Verfahren zu ihrer Herstellung und ihre Verwendung**
Water soluble metal-free phthalocyanine dyes, process for their manufacture and use thereof
Colorants phtalocyanines exempts de métal, solubles dans l'eau, procédé pour leur fabrication et leur utilisation

(30) Priorität: 15.10.1993 DE 4335294; 25.11.1993 DE 4340160
(43) Veröffentlichungstag der Anmeldung: 19.04.1995
(73) Patentinhaber: DyStar Textilfarben GmbH & Co. Deutschland KG, 60318 Frankfurt am Main (DE)
(72) Erfinder: Saitmacher, Klaus, Dr., D-65719 Hofheim (DE); Vermehren, Petra, Dr., D-65510 Idstein (DE)

(56) Entgegenhaltungen:
- EP-A- 0 075 905
- EP-A- 0 231 837
- FR-A- 2 427 365

## Beschreibung

Die Erfindung liegt auf dem technischen Gebiet der faserreaktiven Farbstoffe.

Die Praxis des Färbens mit faserreaktiven Farbstoffen stellt zunehmend erhöhte Anforderungen an die Qualität der Färbungen und die ökologische Verträglichkeit der Farbstoffe und des Färbeprozesses. Infolgedessen besteht weiterhin insbesondere im Hinblick auf die ökologische Unbedenklichkeit der Verwendung der Farbstoffe der Bedarf nach neuen, insbesondere schwermetallfreien faserreaktiven Farbstoffen, die zudem gute färberische Qualitäten und Echtheitseigenschaften besitzen. Beispielsweise sind in den U.S.-Patentschriften Nrs. 4 237 050, 4 350 632 und 4 745 187 faserreaktive Schwermetallkomplex-Phthalocyaninfarbstoffe, wie insbesondere Kupfer- und Nickelphthalocyaninfarbstoffe, mit guten färberischen Eigenschaften beschrieben, die, über einen N-Arylsulfonamid- oder N-Alkylsulfonamid-Rest gebunden, eine faserreaktive Gruppe der Vinylsulfonreihe besitzen. Beim Zerfall dieser Schwermetallkomplex-Phthalocyaninfarbstoffe, beispielsweise beim Entsorgen von Färbereiabwässern und bei gebrauchten Textilien, werden deren Schwermetalle in die Umgebung freigesetzt, so daß die Schwermetalle in die Abwässer und Klärschlämme gelangen. Für die Einschränkung der Belastung von Abwässern und Klärschlämmen durch Schwermetallionen bestehen bereits umfangreiche gesetzliche Regelungen, so daß ein Weg gesucht werden mußte, die bisher bekannten Schwermetall-Phthalocyaninfarbstoffe durch andere ohne Schwermetallionenanteil zu ersetzen.

Mit der vorliegenden Erfindung wurden nunmehr neue, wasserlösliche und schwermetallfreie Phthalocyaninfarbstoffe der nachstehend angegebenen allgemeinen Formel (1) gefunden, mit denen qualitativ hochwertige Färbungen in brillanten Grüntönen mit guten Echtheiten erhalten werden.

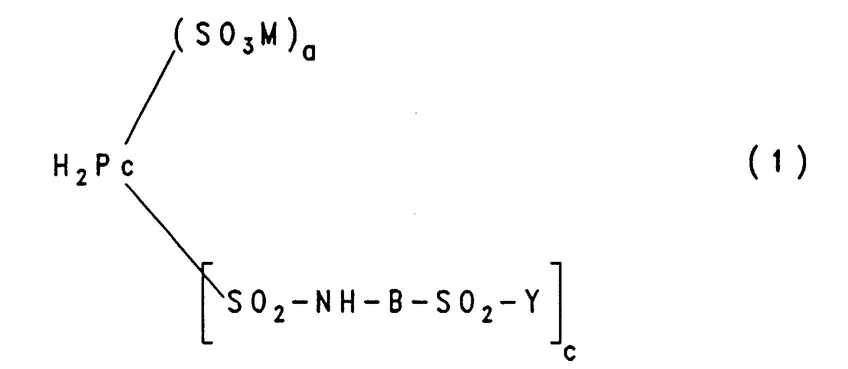

In dieser Formel bedeuten:
- H₂Pc: ist der Rest des Dihydrophthalocyanins der Formel (A) 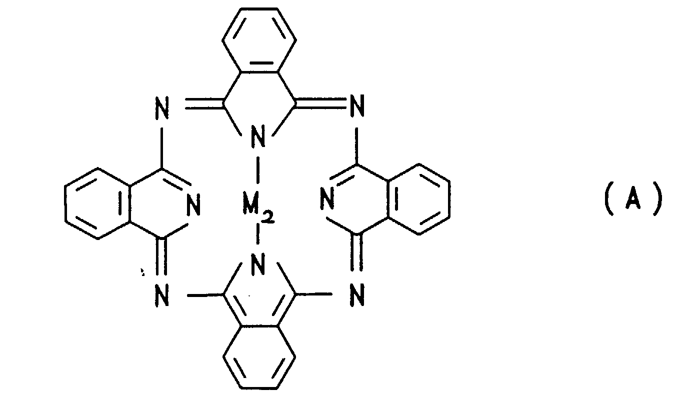
- M: ist Wasserstoff oder ein Alkalimetall, wie Natrium, Kalium oder Lithium;
- B: ist ein Rest der allgemeinen Formel (2a) oder (2b) 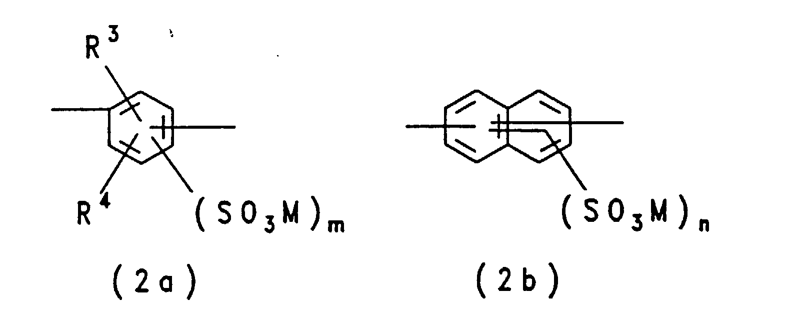 in welchen
- R³: Wasserstoff, Alkyl von 1 bis 4 C-Atomen, wie Ethyl und insbesondere Methyl, oder Alkoxy von 1 bis 4 C-Atomen, wie Ethoxy und insbesondere Methoxy, ist,
- R⁴: Wasserstoff, Halogen, wie Brom und Chlor, Alkyl von 1 bis 4 C-Atomen, wie Ethyl und insbesondere Methyl, oder Alkoxy von 1 bis 4 C-Atomen, wie Ethoxy und insbesondere Methoxy, ist,
- M: die obengenannte Bedeutung besitzt,
- m: für Zahl Null oder 1 steht (wobei im Falle von m gleich Null diese Gruppe für Wasserstoff steht), bevorzugt Null ist,
- n: die Zahl Null, 1 oder 2, bevorzugt 1 oder 2, bedeutet, und in Formel (2a) die Gruppe -SO₂-Y bevorzugt in meta- oder para-Stellung zur Sulfonylaminogruppe gebunden ist und in Formel (2b) die Bindung vom Naphthalinrest zur Sulfonylaminogruppe bevorzugt in β-Stellung des Naphthalinrestes steht;

- Y: ist Vinyl oder ist Ethyl, das in β-Stellung einen Substituenten enthält, der durch Alkali unter Bildung der Vinylgruppe eliminierbar ist, oder ist β-Sulfoethyl oder β-Hydroxyethyl;
- a: ist eine Zahl von Null bis 3, und
- c: ist eine Zahl von 1 bis 4,

wobei die Summe von (a + c) gleich 1 bis 4 beträgt.

Die einzelnen Formelglieder können im Rahmen ihrer Bedeutung zueinander gleiche oder voneinander verschiedene Bedeutungen besitzen.

Die erfindungsgemäßen Phthalocyaninfarbstoffe werden in der Regel in Form von Gemischen der Einzelverbindungen der allgemeinen Formel (1) erhalten, wobei sich diese Einzelverbindungen voneinander durch den Substitutionsgrad der Sulfo- und Sulfonamidgruppen an dem Phthalocyaninrest unterscheiden. Die Formeln der erfindungsgemäßen Phthalocyaninfarbstoffe haben deshalb Indices, die in der Regel gebrochene Zahlen sind.

Alkalisch eliminierbare Substituenten, die in β-Stellung der Ethylgruppe von Y stehen, sind beispielsweise Halogenatome, wie Brom und Chlor, Estergruppen organischer Carbon- und Sulfonsäuren, wie von Alkylcarbonsäuren, gegebenenfalls substituierter Benzolcarbonsäuren und gegebenenfalls substituierter Benzolsulfonsäuren, wie die Gruppen Alkanoyloxy von 2 bis 5 C-Atomen, hiervon insbesondere Acetyloxy, Benzoyloxy, Sulfobenzoyloxy, Phenylsulfonyloxy und Toluylsulfonyloxy, des weiteren saure Estergruppen anorganischer Säuren, wie der Phosphorsäure, Schwefelsäure und Thioschwefelsäure (Phosphato-, Sulfato- und Thiosulfatogruppen), ebenso Dialkylaminogruppen mit Alkylgruppen von jeweils 1 bis 4 C-Atomen, wie Dimethylamino und Diethylamino. Bevorzugt ist Y β-Sulfatoethyl oder Vinyl und insbesondere bevorzugt β-Sulfatoethyl.

Die Gruppen "Sulfo", "Carboxy", "Thiosulfato", "Phosphato" und "Sulfato" schließen sowohl deren Säureform als auch deren Salzform ein. Demgemäß bedeuten Sulfogruppen Gruppen entsprechend der allgemeinen Formel -SO₃M Carboxygruppen Gruppen entsprechend der allgemeinen Formel -COOM, Thiosulfatogruppen Gruppen entsprechend der allgemeinen Formel -S-SO₃M , Phosphatogruppen Gruppen entsprechend der allgemeinen Formel -OPO₃M₂ und Sulfatogruppen Gruppen entsprechend der allgemeinen Formel -OSO₃M in welchen M die obengenannte Bedeutung besitzt.

Formelreste der allgemeinen Formel -B-SO₂-Y sind beispielsweise:
2-(β-Sulfatoethylsulfonyl)-phenyl, 3-(β-Sulfatoethylsulfonyl)-phenyl,
4-(β-Sulfatoethylsulfonyl)-phenyl, 2-Carboxy-5-(β-sulfatoethylsulfonyl)-phenyl,
2-Chlor-3-(β-sulfatoethylsulfonyl)-phenyl, 2-Chlor-4-(β-sulfatoethylsulfonyl)-phenyl, 2-Brom-4-(β-sulfatoethylsulfonyl)-phenyl, 4-Methoxy-3-(β-sulfatoethylsulfonyl)-phenyl, 4-Chlor-3-(β-sulfatoethylsulfonyl)-phenyl, 2-Ethoxy-4- oder -5-(β-sulfatoethylsulfonyl)-phenyl, 2-Methyl-4-(β-sulfatoethylsulfonyl)-phenyl, 2-Methoxy-5- oder -4-(β-sulfatoethylsulfonyl)-phenyl, 2,4-Diethoxy-5-(β-sulfatoethylsulfonyl)-phenyl, 2,4-Dimethoxy-5-(β-sulfatoethylsulfonyl)-phenyl,
2,5-Dimethoxy-4-(β-sulfatoethylsulfonyl)-phenyl, 2-Methoxy-5-methyl-4-(β-sulfatoethylsulfonyl)-phenyl, 2- oder 3- oder 4-(β-Thiosulfatoethylsulfonyl)-phenyl, 2-Methoxy-5-(β-thiosulfatoethylsulfonyl)-phenyl, 2-Sulfo-4-(β-phosphatoethylsulfonyl)-phenyl, 2-Sulfo-4-vinylsulfonyl-phenyl, 2-Chlor-4-oder -5-(β-chlorethylsulfonyl)-phenyl, 3- oder 4-(β-Acetoxyethylsulfonyl)-phenyl,
5-(β-Sulfatoethylsulfonyl)-naphth-2-yl, 6- oder 7- oder 8-(β-Sulfatoethylsulfonyl)-naphth-2-yl, 6-(β-Sulfatoethylsulfonyl)-1-sulfo-naphth-2-yl,
5-(β-Sulfatoethylsulfonyl)-1-sulfo-naphth-2-yl und 8-(β-Sulfatoethylsulfonyl)-6-sulfo-naphth-2-yl.

Bevorzugt in den Phthalocyaninfarbstoffen der allgemeinen Formel (1) ist R³ gleich Wasserstoff, Methyl oder Methoxy, und bevorzugt ist R⁴ gleich Wasserstoff oder Methoxy.

Bevorzugt sind weiterhin Phthalocyaninfarbstoffe der allgemeinen Formel (1), in welchen a eine Zahl von Null bis 3, bevorzugt von 1 bis 2,5, ist und c gleich eine Zahl von 1 bis 4, bevorzugt von 1 bis 2, ist.

Die vorliegende Erfindung betrifft weiterhin ein Verfahren zur Herstellung der Phthalocyaninverbindungen der allgemeinen Formel (1), das dadurch gekennzeichnet ist, daß man ein Phthalocyaninsulfonsäurechlorid der allgemeinen Formel (3) 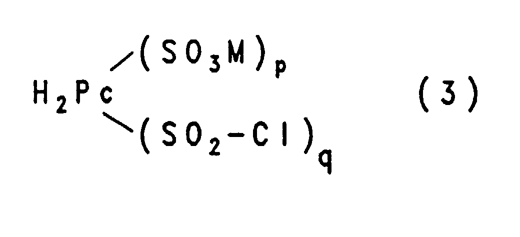 in welcher H₂Pc und M die obengenannten Bedeutungen besitzen, p eine Zahl von Null bis 3 bedeutet und q eine Zahl von 1 bis 4 ist, wobei die Summe von (p+q) gleich 1 bis 4 ist, oder ein Gemisch derselben in wäßrigem oder nichtwäßrigem Medium mit einem Amin der allgemeinen Formel (4)

H₂N - B - SO₂ - Y (4)

in welcher B und Y die obengenannte Bedeutungen haben und Y hier auch die Bedeutung von β-Hydroxyethyl haben kann und unter gleichzeitiger oder nachfolgender partieller Hydrolyse der Sulfochloridgruppen zu Sulfogruppen umsetzt. Gegebenenfalls am Ende der Kondensationsreaktionen werden noch vorhandene Sulfochloridgruppen zu Sulfogruppen hydrolysiert. Bei der erfindungsgemäßen Umsetzung ist in der Regel eine partielle Hydrolyse der Sulfonsäurechloridgruppen zu Sulfogruppen unvermeidlich. Im Falle der Verwendung eines Amins der allgemeinen Formel (4) mit Y gleich β-Hydroxyethyl kann in der erhaltenen Phthalocyaninverbindung die β-Hydroxyethylsulfonyl-Gruppe analog allgemein bekannten Verfahrensweisen in eine Gruppe der Formel -SO₂-Y mit Y gleich einer in β-Stellung durch eine Estergruppe substituierten Ethylgruppe überführt werden, wie beispielsweise in die β-Sulfatoethylsulfonyl-Gruppe mittels Schwefelsäure oder schwefeltrioxidhaltiger Schwefelsäure oder Chlorsulfonsäure.

Die erfindungsgemäßen Kondensationsreaktionen zwischen den Verbindungen der allgemeinen Formel (3) und den Aminen der allgemeinen Formel (4) werden bei einem pH-Wert zwischen 3,5 und 8,5, vorzugsweise zwischen 4 und 8, insbesondere zwischen 5,5 und 6,5, und bei einer Temperatur zwischen O°C und 100°C, vorzugsweise zwischen 20 und 60°C, insbesondere zwischen 45 und 55°C, durchgeführt. In der Regel erfolgen sie in Gegenwart eines Katalysators, wie Pyridin, einer Pyridinsulfonsäure-, Pyridincarbonsäure-, Pyridinsulfonamid- oder Pyridincarbonamid-Verbindung, wie bevorzugt des Nicotinsäureamids, analog den aus den anfangs erwähnten U.S.-Patentschriften oder der US-PS 4 745 187 bekannten Verfahrensweisen.

Die Ausgangs-PhthaIocyaninsulfonsäurechlorid-Verbindungen der allgemeinen Formel (3) werden analog bekannten Verfahrensweisen hergestellt, wie sie beispielsweise aus Angaben in den zuvor genannten U.S.-Patentschriften sowie aus der deutschen Patentschrift Nr. 891 121 ersichtlich sind. Beispielsweise stellt man eine Verbindung der allgemeinen Formel (3) in der Weise her, daß man Phthalocyanin der Formel (A) in Chlorsulfonsäure einträgt und den Ansatz bei einer Temperatur zwischen 80 und 120°C, bevorzugt zwischen 90 und 100°C, mehrere Stunden rührt, danach ein Chlorierungsmittel, vorzugsweise Thionylchlorid, hinzu gibt und den Ansatz mehrere Stunden bei 80 bis 90°C weiterrührt. Der Ansatz wird sodann in zerstoßenes Eis eingerührt und das ausgefällte Phthalocyaninsulfochlorid abgesaugt.
Eine andere Möglichkeit der Herstellung einer Verbindung der allgemeinen Formel (3) ist die Umsetzung des Phthalocyanins der Formel (A) mit Schwefelsäure/Schwefeltrioxid in Schwefeltrioxid enthaltender Schwefelsäure (Oleum) mit einem Schwefeltrioxidgehalt von etwa 50 bis 65 Gew.-% bei etwa 80°C. Nach dieser Umsetzung rührt man den Ansatz in eine eisgekühlte wäßrige Lösung von Natriumchlorid ein und überführt die erhaltene Phthalocyaninsulfonsäure nach üblichen Verfahrensweisen, beispielsweise mittels Thionylchlorid in Dimethylformamid, in das Phthalocyaninsulfonsäurechlorid.

Die Abscheidung der erfindungsgemäß hergestellten Phthalocyaninfarbstoffe der allgemeinen Formel (1), nachfolgend als "Farbstoffe (1)" bezeichnet, aus den Syntheseansätzen erfolgt nach allgemein bekannten Methoden entweder durch Ausfällen aus dem Reaktionsmedium mittels Elektrolyten, wie beispielsweise Natriumchlorid oder Kaliumchlorid, oder durch Eindampfen der Reaktionslösung, beispielsweise durch Sprühtrocknung, wobei dieser Reaktionslösung eine Puffersubstanz zugefügt werden kann. Die Farbstoffe (1) haben faserreaktive Eigenschaften und besitzen sehr gute Farbstoffeigenschaften. Sie können deshalb zum Färben und Bedrucken von hydroxy- und/oder carbonamidgruppenhaltigem Material, insbesondere Fasermaterial, wie auch von Leder, verwendet werden. Ebenso können auch die bei der Synthese der erfindungsgemäßen Verbindungen anfallenden Lösungen, gegebenenfalls nach Zusatz einer Puffersubstanz, gegebenenfalls nach Konzentrierung, direkt als Flüssigpräparation der färberischen Verwendung zugeführt werden.

Gegenstand der vorliegenden Erfindung ist deshalb auch die Verwendung der Farbstoffe (1) zum Färben (einschließliches Bedrucken) von hydroxy- und carbonamidgruppenhaltigen Materialien bzw. Verfahren zu deren Anwendung auf diesen Substraten. Bevorzugt kommen die Materialien in Form von Fasermaterialien zur Anwendung, insbesondere in Form von Textilfasern, wie Garnen, Wickelkörpern und Geweben.

Hydroxygruppenhaltige Materialien sind natürliche oder synthetische hydroxygruppenhaltige Materialien, wie beispielsweise Cellulosefasermaterialien, auch in Form von Papier, oder deren Regeneratprodukte und Polyvinylalkohole. Cellulosefasermaterialien sind vorzugsweise Baumwolle, aber auch andere Pflanzenfasern; wie Leinen, Hanf, Jute und Ramiefasern; regenerierte Cellulosefasern sind beispielsweise Zellwolle und Viskosekunstseide.

Carbonamidgruppenhaltige Materialien sind beispielsweise synthetische und natürliche Polyamide und Polyurethane, insbesondere in Form der Fasern, beispielsweise Wolle und andere Tierhaare, Seide , Leder, Polyamid-6,6, Polyamid-6, Polyamid-11 und Polyamid-4.

Die Farbstoffe (1) lassen sich auf den genannten Substraten, insbesondere auf den genannten Fasermaterialien, nach den für wasserlösliche Farbstoffe, insbesondere für faserreaktive Farbstoffe, bekannten Anwendungstechniken applizieren und fixieren. So erhält man mit ihnen auf Cellulosefasern nach den Ausziehverfahren aus langer Flotte unter Verwendung von verschiedensten säurebindenden Mitteln und gegebenenfalls neutralen Salzen, wie Natriumchlorid oder Natriumsulfat, Färbungen in sehr guten Farbausbeuten und mit ausgezeichnetem Farbaufbau. Man färbt bei Temperaturen zwischen 40 und 105°C, gegebenenfalls bei Temperaturen bis zu 130°C unter Druck, gegebenenfalls in Gegenwart von üblichen Färbereihilfsmitteln, im wäßrigen Bad. Man kann dabei so vorgehen, daß man das Material in das warme Bad einbringt und dieses allmählich auf die gewünschte Färbetemperatur erwärmt und den Färbeprozeß bei dieser Temperatur zu Ende führt. Die das Ausziehen des Farbstoffes beschleunigenden Neutralsalze können dem Bade gewünschtenfalls auch erst nach Erreichen der eigentlichen Färbetemperatur zugesetzt werden.

Nach den Klotzverfahren werden auf Cellulosefasern ebenfalls Färbungen mit ausgezeichneten Farbausbeuten und sehr gutem Farbaufbau erhalten, wobei durch Verweilen bei Raumtemperatur oder erhöhter Temperatur, beispielsweise bis zu etwa 60°C, durch Dämpfen oder mit Trockenhitze in üblicher Weise fixiert werden kann.

Ebenfalls erhält man nach den üblichen Druckverfahren für Cellulosefasern, die entweder einphasig durchgeführt werden können, beispielsweise durch Bedrucken mit einer Natriumbicarbonat oder ein anderes säurebindendes Mittel und das Farbmittel enthaltenden Druckpaste und durch anschließendes Dämpfen bei 100 bis 103°C, oder die zweiphasig durchgeführt werden können, beispielsweise durch Bedrucken mit neutraler oder schwach saurer, das Farbmittel enthaltenden Druckpaste und anschließendes Fixieren entweder durch Hindurchführen der bedruckten Ware durch ein heißes elektrolythaltiges alkalisches Bad oder durch Überklotzen mit einer alkalischen elektrolythaltigen Klotzflotte mit anschließendem Verweilen dieses behandelten Materials oder anschließendem Dämpfen oder anschließender Behandlung mit Trockenhitze, farbstarke Drucke mit gutem Stand der Konturen und einem klaren Weißfond. Der Ausfall der Drucke ist von wechselnden Fixierbedingungen nur wenig abhängig. Sowohl in der Färberei als auch in der Druckerei sind die mit den erfindungsgemäßen Verbindungen erhaltenen Fixiergrade sehr hoch.

Bei der Fixierung mittels Trockenhitze nach den üblichen Thermofixierverfahren verwendet man Heißluft von 120 bis 200°C. Neben dem üblichen Wasserdampf von 101 bis 103°C kann auch überhitzter Dampf und Druckdampf von Temperaturen bis zu 160°C eingesetzt werden.

Die säurebindenden und die Fixierung der Farbstoffe auf den Cellulosefasern bewirkenden Mittel sind beispielsweise wasserlösliche basische Salze der Alkalimetalle und der Erdalkalimetalle von anorganischen oder organischen Säuren, ebenso Verbindungen, die in der Hitze Alkali freisetzen. Insbesondere sind die Alkalimetallhydroxyde und Alkalimetallsalze von schwachen bis mittelstarken anorganischen oder organischen Säuren zu nennen, wobei von den Alkaliverbindungen vorzugsweise die Natrium- und Kaliumverbindungen gemeint sind. Solche säurebindenden Mittel sind beispielsweise Natriumhydroxyd, Kaliumhydroxyd, Natriumcarbonat, Natriumbicarbonat, Kaliumcarbonat, Natriumformiat, Natriumdihydrogenphosphat und Dinatriumhydrogenphosphat.

Durch die Behandlung der Farbstoffe (1) mit den säurebindenden Mitteln, gegebenenfalls unter Wärmeeinwirkung, werden die Farbstoffe chemisch an die Cellulosefaser gebunden; insbesondere die Cellulosefärbungen zeigen nach der üblichen Nachbehandlung durch Spülen zur Entfernung von nicht fixierten Farbstoffanteilen ausgezeichnete Naßechtheiten, zumal sich nicht fixierte Farbstoffanteile leicht wegen ihrer guten Kaltwasserlöslichkeit auswaschen lassen.

Die Färbungen auf Polyurethan- und Polyamidfasern werden üblicherweise aus saurem Milieu ausgeführt. So kann man beispielsweise dem Färbebad Essigsäure und/oder Ammoniumsulfat und/oder Essigsäure und Ammoniumacetat oder Natriumacetat zufügen, um den gewünschten pH-Wert zu erhalten. Zur Erreichung einer brauchbaren Egalität der Färbung empfiehlt sich ein Zusatz an üblichen Egalisierhilfsmitteln, wie beispielsweise auf Basis eines Umsetzungsproduktes von Cyanurchlorid mit der dreifach molaren Menge einer Aminobenzolsulfonsäure oder Aminonaphthalinsulfonsäure oder auf Basis eines Umsetzungsproduktes von beispielsweise Stearylamin mit Ethylenoxid. In der Regel wird das zu färbende Material bei einer Temperatur von etwa 40°C in das Bad eingebracht, dort einige Zeit darin bewegt, das Färbebad dann auf den gewünschten schwach sauren, vorzugsweise schwach essigsauren pH-Wert nachgestellt und die eigentliche Färbung bei einer Temperatur zwischen 60 und 98°C durchgeführt. Die Färbungen können aber auch bei Siedetemperatur oder bei Temperaturen bis zu 120°C (unter Druck) ausgeführt werden.

Die mit den Farbstoffen (1) hergestellten Färbungen und Drucke auf Cellulosefasermaterialien besitzen eine hohe Farbstärke, außerdem gute Lichtechtheiten und gute Naßechtheiten, wie Wasch-, Walk-, Wasser-, Seewasser-, Überfärbe- und Schweißechtheiten, darüber hinaus eine gute Plissierechtheit, Bügelechtheit und Reibechtheit.

Die nachstehenden Beispiele dienen zur Erläuterung der Erfindung. Die formelmäßig beschriebenen Verbindungen sind in Form der freien Säure angegeben; im allgemeinen werden sie in Form ihrer Alkalimetallsalze hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen als solche oder in Form ihrer Salze, vorzugsweise Alkalimetallsalze, wie Lithium-, Natrium- oder Kaliumsalze, in die Synthese eingesetzt werden.
Die in den Beispielen genannten Teile sind Gewichtsteile; die Prozentangaben stellen Gewichtsprozente dar, sofern nicht anders vermerkt. Gewichtsteile stehen zu Volumenteilen im Verhältnis von Kilogramm zu Liter.

Die für die erfindungsgemäßen Verbindungen angegebenen Absorptionsmaxima (λₘₐₓ) im sichtbaren Bereich wurden anhand ihrer Alkalimetallsalze in wäßriger Lösung ermittelt. In den Tabellenbeispielen sind die λₘₐₓ-Werte bei der Farbtonangabe in Klammern gesetzt; die Wellenlängenangabe bezieht sich auf nm.

### Beispiel A

20 Teile Phthalocyanin werden in 120 Teile Chlorsulfonsäure eingetragen, wobei die Temperatur des Ansatzes auf 60 bis 70°C ansteigt. Man rührt noch sechs Stunden bei 100°C weiter, kühlt den Ansatz sodann auf 80 bis 90°C und gibt langsam unter gutem Rühren 34 Vol.-Teile Thionylchlorid hinzu. Man rührt noch vier Stunden bei 90°C, rührt den Ansatz sodann auf Eis, saugt das ausgefallene Phthalocyaninsulfochlorid mit einem durchschnittlichen Substitutionsgrad von 2,5 ab und wäscht es mit Eiswasser nach.

### Beispiel B

20 Teile Phthalocyanin werden in 300 Teile eines Gemisches aus 150 Teilen Schwefelsäure-Monohydrat und 150 Teile 65%iges Oleum eingetragen. Man rührt den Ansatz noch vier Stunden bei 80°C nach, kühlt ihn danach auf 20°C ab und gibt ihn unter gutem Rühren in eine Mischung von 10 000 Teilen Eis und 3000 Teilen Natriumchlorid. Der Niederschlag wird abfiltriert, in etwa 3000 Teilen Wasser gelöst und filtriert. Aus dem Filtrat wird durch Zugabe von Natriumchlorid die erhaltene Phthalocyanin-tetrasulfonsäure ausgesalzen, abfiltriert und mit wäßriger Ethanollösung nachgewaschen.
Die erhaltene Phthalocyanin-tetrasulfonsäure wird in 200 Teile Dimethylformamid eingerührt, und es werden 200 Vol.-Teile Thionylchlorid unter gutem Rühren langsam hinzugegeben. Man rührt den Ansatz noch etwa sechs Stunden bei 50 bis 55°C nach und isoliert das Phthalocyanin-tetrasulfochlorid entweder durch destillatives Entfernen des Dimethylformamids und überschüssigen Thionylchlorids oder durch Einrühren des Ansatzes in Eis unter anschließender Filtration.

### Beispiel 1

Eine Lösung mit einem pH-Wert von 6,5 von 46 Teilen 4-(β-Sulfatoethylsulfonyl)-anilin in 120 Teilen Wasser werden unter Rühren mit dem feuchten Filterrückstand aus Beispiel A und 4 Teilen Nicotinsäureamid versetzt. Man rührt den Ansatz noch zwei Stunden bei 50°C und anschließend bei etwa 20°C unter Einhaltung des pH-Wertes von 6,5 nach. Nach Beendigung der Kondensationsreaktion wird der Ansatz filtriert und der erfindungsgemäße Phthalocyaninfarbstoff durch Aussalzen mittels Natriumchlorid oder durch Eindampfen der Reaktionslösung unter reduziertem Druck isoliert.

Der erfindungsgemäße Phthalocyaninfarbstoff besitzt, in Form der freien Säure geschrieben, die Formel 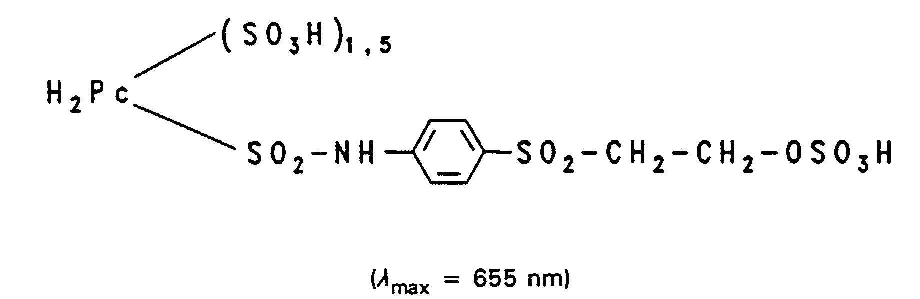 in welcher H₂Pc den Rest des Phthalocyanins der Formel (A) bedeutet. Er zeigt sehr gute faserreaktive Farbstoffeigenschaften, ist in Wasser sehr leicht löslich und liefert nach den in der Technik für faserreaktive Farbstoffe üblichen Applikations- und Fixierverfahren auf den in der Beschreibung genannten Materialien, wie insbesondere Cellulosefasermaterialien, wie Baumwolle, brillante, grüne Färbungen und Drucke mit guten Echtheitseigenschaften.

### Beispiel 2

Man verfährt zur Herstellung eines erfindungsgemäßen Phthalocyaninfarbstoffes gemäß den Angaben des Beispieles 1, setzt jedoch anstelle des Phthalocyaninsulfochlorids aus Beispiel A das Phthalocyanintetrasulfochlorid aus Beispiel B und anstelle des 4-(β-Sulfatoethylsulfonyl)-anilins die gleiche Menge an 3-(β-Sulfatoethylsulfonyl)-anilin in den Reaktionsansatz ein.
Der erhaltene erfindungsgemäße Phthalocyaninfarbstoff der Formel (in Form der freien Säure geschrieben) 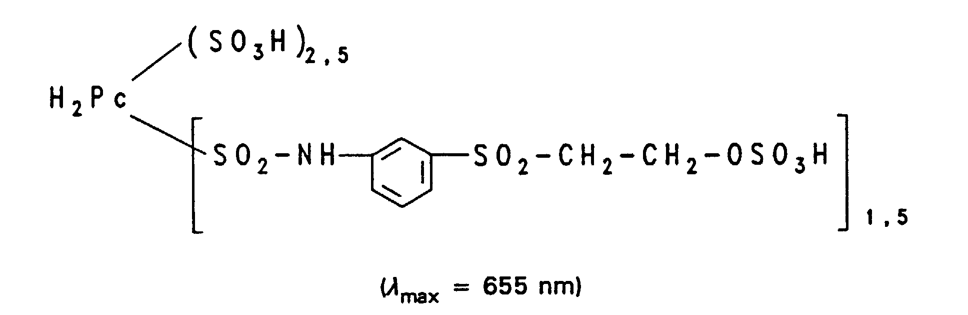 in welcher H₂Pc den Rest des Phthalocyanins der Formel (A) bedeutet, zeigt gute faserreaktive, anwendungstechnische Eigenschaften und färbt beispielsweise Cellulosefasermaterialien, wie Baumwolle, nach den in der Technik für faserreaktive Farbstoffe üblichen Färbe- und Druckverfahren in farbstarken, brillanten, etwas blaustichig grüne Tönen mit guten Echtheitseigenschaften.

### Beispiel 3

Zur Herstellung eines erfindungsgemäßen Phthalocyaninfarbstoffes setzt man gemäß den Angaben des Beispieles 1 55 Teile 2,5-Dimethoxy-4-(β-sulfatoethylsulfonyl)-anilin in 100 Teilen Wasser bei einem pH-Wert von 6,5 mit dem feuchten Filterrückstand des Phthalocyaninsulfochlorids aus Beispiel A in Gegenwart von 6 Teilen Nicotinsäureamid um und isoliert den Farbstoff, der Formel (in Form der freien Säure geschrieben) 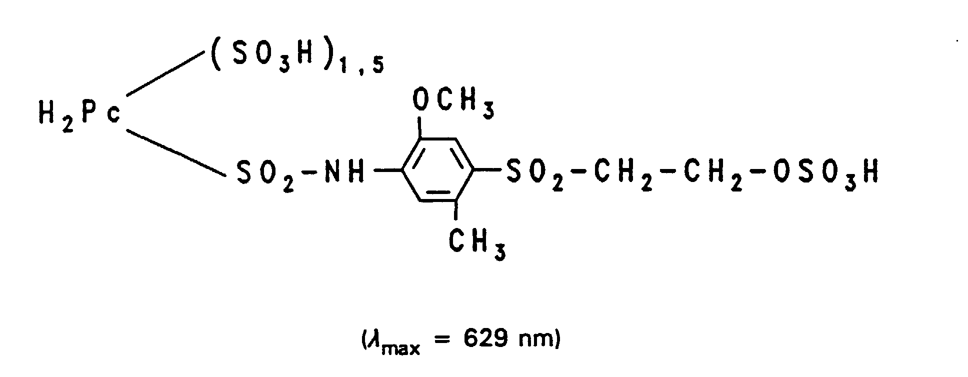 in welcher H₂Pc den Rest des Phthalocyanins der Formel (A) bedeutet, in der angegebenen Weise. Er zeigt sehr gute faserreaktive Farbstoffeigenschaften und liefert beispielsweise auf Baumwolle brillante grüne Färbungen und Drucke mit guten Echtheitseigenschaften.

### Beispiel 4

Zur Herstellung eines erfindungsgemäßen Phthalocyaninfarbstoffes verfährt man gemäß der Verfahrensweise des Beispieles 3, geht jedoch von 52 Teilen 2-Methoxy-5-methyl-4-(β-sulfatoethylsulfonyl)-anilin aus. Man erhält den erfindungsgemäßen Phthalocyaninfarbstoff der Formel (in Form der freien Säure geschrieben) 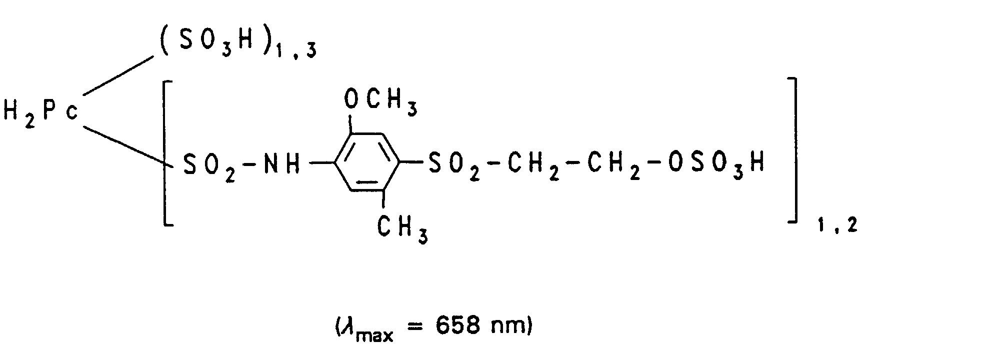 in welcher H₂Pc den Rest des Phthalocyanins der Formel (A) bedeutet, mit dem nach den in der Technik üblichen Färbe- und Druckverfahren beispielsweise auf Baumwolle farbstarke, brillante grüne Färbungen und Drucke mit guten Echtheitseigenschaften.

## Patentansprüche

1. Phthalocyaninfarbstoff der allgemeinen Formel (1) 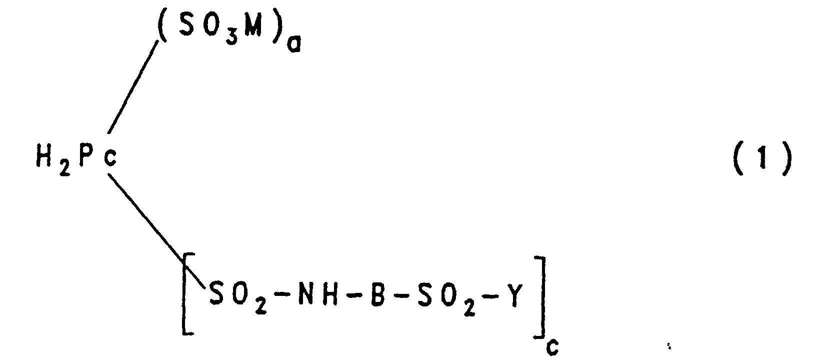 in welcher bedeuten:
H₂Pc ist der Rest des Phthalocyanins;
M ist Wasserstoff oder ein Alkalimetall;
B ist ein Rest der allgemeinen Formel (2a) oder (2b) 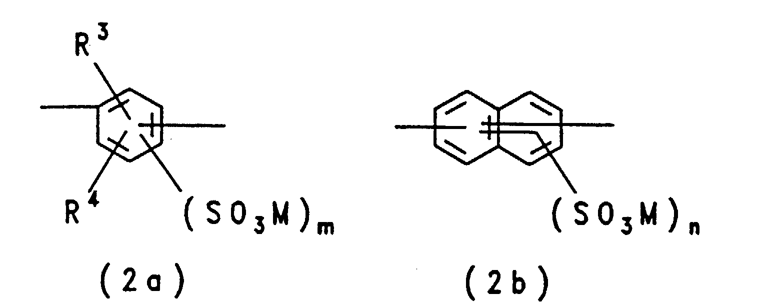 in welchen
R³ Wasserstoff, Alkyl von 1 bis 4 C-Atomen. oder Alkoxy von 1 bis 4 C-Atomen ist,
R⁴ Wasserstoff, Halogen, Alkyl von 1 bis 4 C-Atomen oder Alkoxy von 1 bis 4 C-Atomen ist,
M die obengenannte Bedeutung besitzt,
m für Zahl Null oder 1 steht und
n die Zahl Null, 1 oder 2, bedeutet;
Y ist Vinyl oder ist Ethyl, das in β-Stellung einen Substituenten enthält, der durch Alkali unter Bildung der Vinylgruppe eliminierbar ist;
a ist eine Zahl von Null bis 3,
und
c ist eine Zahl von 1 bis 4,
wobei die Summe von (a+c) gleich 1 bis 4 beträgt.

2. Phthalocyaninfarbstoff nach Anspruch 1, dadurch gekennzeichnet, daß B ein Rest der allgemeinen Formel (2a) ist, in welcher R³ Wasserstoff, Methyl oder Methoxy ist, R⁴ Wasserstoff oder Methoxy ist und m für die Zahl Null steht.

3. Phthalocyaninfarbstoff nach Anspruch 1 oder 2, dadurch gekennzeichnet, daß a eine Zahl von Null bis 3 und c eine Zahl von 1 bis 2 ist.

4. Phthalocyaninfarbstoff nach mindestens einem der Ansprüche 1 bis 3, dadurch gekennzeichnet, daß Y gleich β-Sulfatoethyl oder Vinyl ist.

5. Verfahren zur Herstellung eines Phthalocyaninfarbstoffes der allgemeinen Formel (1) von Anspruch 1, dadurch gekennzeichnet, daß man Phthalocyaninsulfonsäurechlorid der allgemeinen Formel (3) 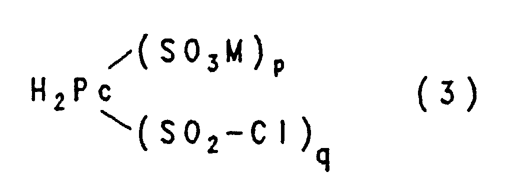 in welcher H₂Pc und M die in Anspruch 1 genannten Bedeutungen besitzen, p eine Zahl von Null bis 3 bedeutet und q eine Zahl von 1 bis 4 ist, wobei die Summe von (p+q) gleich 1 bis 4 ist, in wäßrigem oder nicht wäßrigem Medium mit einem Amin der allgemeinen Formel (4)
H₂N - B - SO₂ - Y (4)
in welche B und Y die in Anspruch 1 genannte Beteutungen haben und unter gleichzeitiger oder nachfolgender partieller Hydrolyse der Sulfochloridgruppen zu Sulfogruppen umsetzt, und gegebenenfalls im Falle von Y gleich-β-Hydroxyethyl die β-Hydroxyethylsulfonyl-Gruppe in eine Gruppe der Formel -SO-₂-Y, in welcher Y eine in β-Stellung durch eine Estergruppe substituierte Ethylgruppe ist, überführt.

6. Verwendung eines Phthalocyaninfarbstoffs von mindestens einem der Ansprüche 1 bis 4 oder eines nach Anspruch 5 hergestellten Phthalocyaninfarbstoffes zum Färben von hydroxy- und/oder carbonamidgruppenhaltigem Material, insbesondere Fasermaterial.

7. Verfahren zum Färben von hydroxy- und/oder carbonamidgruppenhaltigem Material, vorzugsweise Fasermaterial, bei welchem man einen Farbstoff auf das Material aufbringt oder in das Material einbringt und den Farbstoff auf oder in dem Material mittels Wärme oder mit Hilfe eines alkalisch wirkenden Mittels oder durch beide Maßnahmen fixiert, dadurch gekennzeichnet, daß man als Farbstoff einen Phthalocyaninfarbstoff von mindestens einem der Ansprüche 1 bis 4 oder einen nach Anspruch 5 hergestellten Phthalocyaninfarbstoff in das Verfahren einsetzt.

## Claims

1. A phthalocyanine dye of the formula (1) 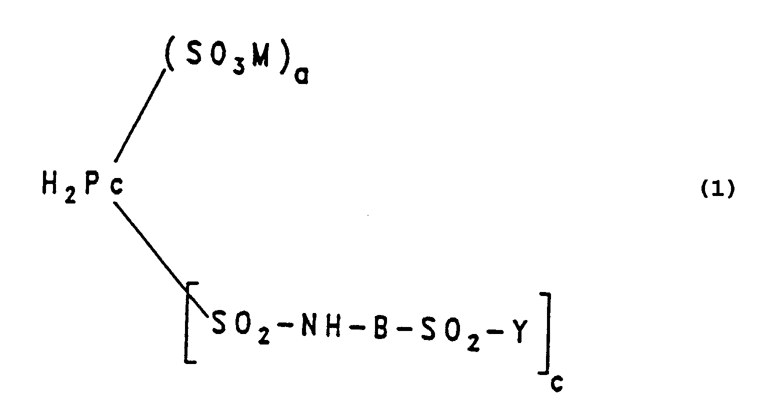 where
H₂Pc is the radical of the phthalocyanine;
M is hydrogen or an alkali metal;
B is a radical of the formula (2a) or (2b) 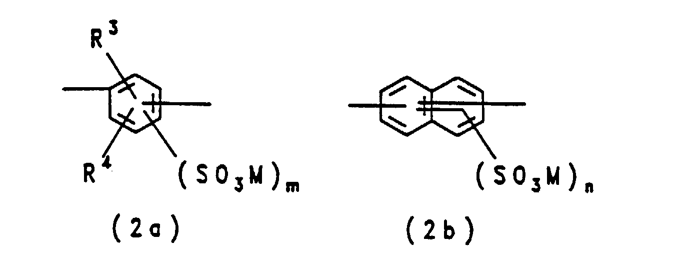 where
R³ is hydrogen, alkyl of 1 to 4 carbon atoms, or alkoxy of 1 to 4 carbon atoms,
R⁴ is hydrogen, halogen, alkyl of 1 to 4 carbon atoms, or alkoxy of 1 to 4 carbon atoms,
M is as defined above,
m is zero or 1, and
n is zero, 1 or 2;
Y is vinyl or is an ethyl group which, in the β-position, contains a substituent which is eliminable by alkali to leave a vinyl group;
a is from zero to 3, and
c is from 1 to 4,
the sum of (a+c) being from 1 to 4.

2. A phthalocyanine dye as claimed in claim 1, wherein B is a radical of the formula (2a) where R³ is hydrogen, methyl or methoxy, R⁴ is hydrogen or methoxy, and m is zero.

3. A phthalocyanine dye as claimed in claim 1 or 2, wherein a is from zero to 3 and c is from 1 to 2.

4. A phthalocyanine dye as claimed in at least one of claims 1 to 3, wherein Y is β-sulfatoethyl or vinyl.

5. A process for preparing a phthalocyanine dye of the formula (1) of claim 1, which comprises reacting a phthalocyaninesulfonyl chloride of the formula (3) 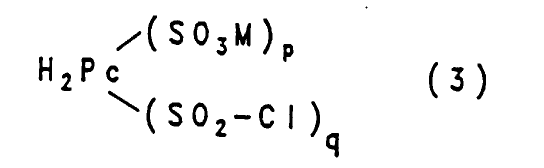 where H₂Pc and M are each as defined in claim 1, p is from zero to 3, and q is from 1 to 4, the sum of (p+q) being from 1 to 4, in an aqueous or nonaqueous medium with an amine of the formula (4)
H₂N-B-SO₂-Y (4)
where B and Y are each as defined in claim 1, with concurrent or successive partial hydrolysis of the sulfonyl chloride groups to sulfo groups, and optionally in the case of Y being β-dihydroxyethyl converting the β-hydroxyethylsulfonyl group into a group of the formula -SO₂-Y where Y is an ethyl group substituted in the β-position by an ester group.

6. The use of a phthalocyanine dye of at least one of claims 1 to 4 or of a phthalocyanine dye prepared as claimed in claim 5 for dyeing hydroxyl- and/or carboxamido-containing material, in particular fiber material.

7. A process for dyeing hydroxyl- and/or carboxamido-containing material, preferably fiber material, by bringing a dye onto or into the material and fixing the dye on or in the material by means of heat or with the aid of an alkaline agent or by both measures, which comprises using in the process a dye that is a phthalocyanine dye of at least one of claims 1 to 4 or a phthalocyanine dye prepared as claimed in claim 5.

## Revendications

1. Colorant phtalocyanine de formule générale (1) 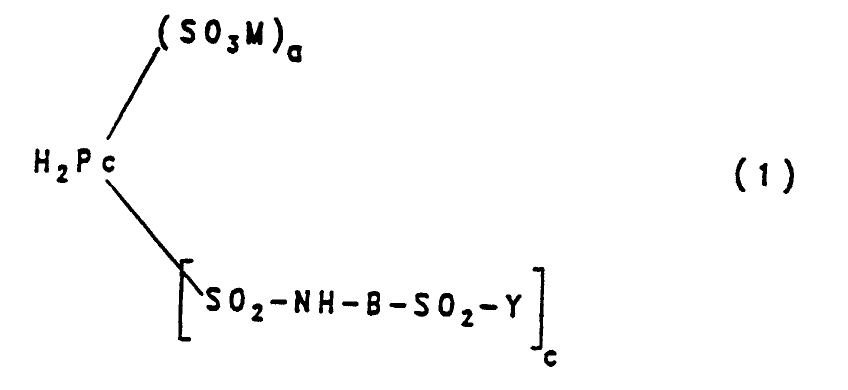 dans laquelle:
H₂Pc est le radical de la phtalocyanine;
M est l'hydrogène ou un métal alcalin;
B est un radical de formules générales (2a) ou (2b) 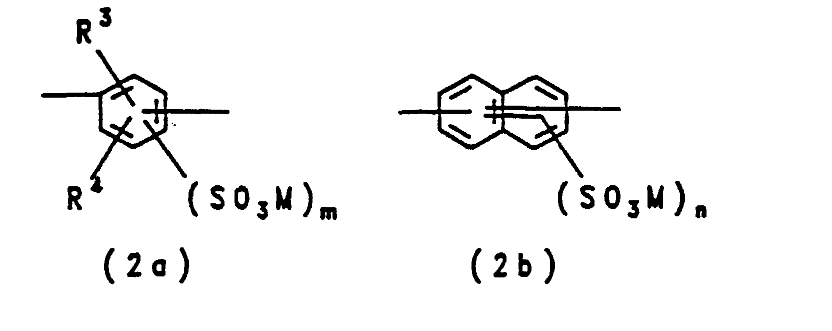
dans lesquelles
R³ est l'hydrogène, un alkyle ayant de 1 à 4 atomes de carbone ou un alcoxy ayant de 1 à 4 atomes de carbone,
R⁴ est l'hydrogène, un halogène, un alkyle ayant de 1 à 4 atomes de carbone ou un alcoxy ayant de 1 à 4 atomes de carbone,
M est comme défini ci-dessus,
m vaut zéro ou 1, et
n vaut zéro, 1 ou 2;
Y est un vinyle ou un éthyle, qui contient un substituant en position β, qui peut être éliminé par un alcali en formant le groupe vinyle;
a vaut de zéro à 3, et
c vaut de 1 à 4,
la somme de (a + c) valant de 1 à 4.

2. Colorant phtalocyanine selon la revendication 1, caractérisé en ce que B est un radical de formule générale (2a), dans laquelle R³ est l'hydrogène, un méthyle ou un méthoxy, R⁴ est l'hydrogène ou un méthoxy et m vaut zéro.

3. Colorant phtalocyanine selon la revendication 1 ou 2, caractérisé en ce que a vaut de zéro à 3 et c vaut de 1 à 2.

4. Colorant phtalocyanine selon l'une au moins des revendications 1 à 3, caractérisé en ce que Y est un β-sulfatoéthyle ou un vinyle.

5. Procédé de préparation d'un colorant phtalocyanine de formule générale (1) selon la revendication 1, caractérisé en ce que l'on fait réagir un chlorure d'acide phtalocyanine sulfonique de formule générale (3) 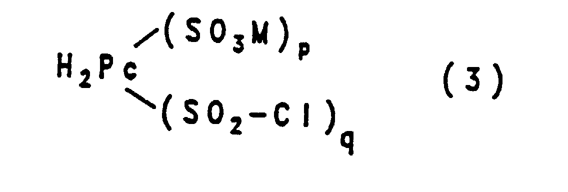 dans laquelle H₂Pc et M sont comme définis à la revendication 1, p vaut de zéro à 3 et q vaut de 1 à 4, la somme de (p + q) valant de 1 à 4, en milieu aqueux on non-aqueux avec une amine de formule générale (4)
H₂N - B - SO₂ - Y (4)
dans laquelle B et Y sont comme définis à la revendication 1, et avec hydrolyse partielle simultanée ou ultérieure des groupes sulfochlorure en groupes sulfo, et on transforme éventuellement, dans le cas où Y est un β-hydroxyéthyle, le groupe β-hydroxyéthylsulfonyle en un groupe de formule -SO₂-Y, dans laquelle Y est un groupe éthyle substitué par un groupe ester en position β.

6. Utilisation d'un colorant phtalocyanine selon l'une au moins des revendications 1 à 4 ou d'un colorant phtalocyanine préparé selon la revendication 5, pour la coloration d'un matériau contenant des groupes hydroxy et/ou carbonamide, en particulier d'un matériau fibreux.

7. Procédé de coloration d'un matériau contenant des groupes hydroxy et/ou carbonamide, de préférence d'un matériau fibreux, dans lequel on applique un colorant sur le matériau ou on l'introduit dans le matériau et on fixe le colorant sur ou dans le matériau par la chaleur ou à l'aide d'un agent à activité alcaline ou par les deux méthodes, caractérisé en ce que le colorant utilisé dans le procédé est un colorant phtalocyanine selon l'une au moins des revendications 1 à 4 ou un colorant phtalocyanine préparé selon la revendication 5.
